# EUROPEAN PATENT APPLICATION

(11) **EP 3 511 843 A1**
(43) Date of publication of application: **17.07.2019**
(21) Application number: 18151023.1
(22) Date of filing: 10.01.2018
(51) Int. Cl.: G06F 17/22

(54) **METHOD AND SYSTEM FOR INTEGRATING DATA RECEIVED FROM ONE OR MORE DATA SOURCES**

(71) Applicant: Siemens Aktiengesellschaft, 80333 München (DE)
(72) Inventor: Katrych, Sergii, 81737 München (DE)

(57) **Abstract**

The invention relates to a method for integrating data received from one or more data sources (30-1, 30-2) to output the received data through a unified API interface (12) of a software platform (10). The method makes use of semantic vocabularies (SV-1, SV-2) used by a respective of the one or more data sources (30-1, 30-2). Each semantic vocabulary (SV-1, SV-2) defines terms that are used in a data model and/or an API scheme of the respective data source (30-1, 30-2). A mapping of the semantic vocabulary (SV-1, SV-2) used by a respective data source (30-1, 30-2) to a semantic reference vocabulary (SRV) is made. The semantic reference vocabulary (SRV) defines terms that are used in a data model and/or an API scheme of the unified API interface (12). In the mapping, different terms in the semantic vocabulary (SV-1, SV-2) and the semantic reference vocabulary (SRV) that have the same meaning are assigned to each other. An automated adaption of the terms used is made by a data adapter (11) with help of the mapping. Integrating new data sources to a software platform (10) can be done automatically, thus saving cost and time for integration.

## Description

The invention relates to a method and a system for integrating data received from one or more data sources to output the received data through a unified API (Application Programming Interface) interface.

Complex software systems may make use of technologies like Web Services. Web Services use an API interface to let other components, e.g. software-sub-systems, communicate with other. Commercial software platforms like "MindSphere" or "SiMobility Connect" integrate a huge amount of applications through a "unified" API interface, i.e. an API interface which is used for all Webs Services connected to the software platform. The number of such integrated services is expected to grow in the future which requires use of standardized interfaces.

A unified API interface is can be regarded as a contract for end applications that are using software platforms with the expectation that this contract will not change in future. As a result, for integrating each new Web Service, a software developer has to analyze the API schema of the Web Service that has to be integrated to meet the requirements of the unified API interface. The software developer has to develop a software adapter or a software component that can integrate the new Web Service into the existing software platform to ensure that the end application can make use of this new component without the need to make any changes to the above mentioned communication protocol, with the result that the API contract stays unchanged.

Here, the software developer has to cope with two problems: He has to ensure that the integration of a new service, using a specific API schema of the service to be integrated, and the data model used by the Web Service are in conformity with the software platform providing the unified API interface. Both, data models and API schema properties are regarded to be differently in different services, even when they represent the same values and information, respectively.

Hence, integrating a new Web Service into a software platform is a challenging and time-consuming task which has to be done manually by a software developer so far.

It is an object of the present invention, to provide an improved method and system for integrating data received from one or more data sources to output the received data through a unified API interface.

These objects are solved by a method according to claim 1 and a system according to the features of claim 13. Preferred embodiments are set out in the dependent claims.

According to a first aspect of the invention, a method for integrating data received from one or more data sources to output the received data through a unified API interface is provided. The data sources may be Web Services, arbitrary software components, sensors, field devices, and so on. The unified API interface may be provided by a commercial software platform, such as Siemens commercial products "MindSphere", "SiMobility Connect" or any other. The method as set out below may be executed by a processing unit hosting the software platform that provides the unified API interface.

The method comprises the step of retrieving an information about a semantic vocabulary used by a respective of the one or more data sources. The semantic vocabulary defines terms that are used in a data model and/or an API scheme of the respective data source. The method further comprises the step of processing the information for receiving a mapping of the semantic vocabulary used by a respective data source to a semantic reference vocabulary. The semantic reference vocabulary defines terms that are used in a data model and/or an API scheme of the unified API interface. In the mapping, different terms in the semantic vocabulary and the semantic reference vocabulary that have the same meaning are assigned to each other. As a further step of the method, on requesting data from one of the data sources, querying the mapping to use the terms used by the data source is carried out. Additionally or alternatively, on receiving data from one of the data sources, querying the mapping to output the received data through the unified API interface with the terms of the semantic reference vocabulary used by the unified API interface is carried out.

According to a second aspect, a system for integrating data received from one or more data sources to output the received data through a unified API interface is suggested. The system comprises a processing unit adapted to retrieve an information about a semantic vocabulary used by a respective of the one or more data sources, wherein the semantic vocabulary defines terms that are used in a data model and/or an API scheme of the respective data source. The processing unit is further adapted to process the information for receiving a mapping of the semantic vocabulary used by a respective data source to a semantic reference vocabulary, the semantic reference vocabulary defining terms that are used in a data model and/or an API scheme of the unified API interface, in which different terms in the semantic vocabulary and the semantic reference vocabulary that have the same meaning are assigned to each other. Furthermore, the processing unit is adapted to, on requesting data from one of the data sources, query the mapping to use the terms used by the data source, and/or on receiving data from one of the data sources, query the mapping to output the received data through the unified API interface with the terms of the semantic reference vocabulary used by the unified API interface.

According to the invention, it is possible to reduce costs and time for integrating new data sources into a software platform, like MindSphere or SiMobility Connect. Using semantic vocabularies enables an automated integration of the data sources, e.g. new Web Services, software components, field devices or sensors. As a result, it is possible to enable an automated data mapping without any or much input from human beings. Therefore, system integration of new data sources can be speeded up by using an automatism provided by the mapping, thereby reducing integration costs.

According to a preferred embodiment, the information about the semantic vocabulary consists of a reference to a pre-defined semantic vocabulary. This embodiment takes into account the fact that for different domains semantic vocabularies were already defined in the past. When providing a new data source, the provider of the new data source may decide to use an already existing semantic vocabulary for the new data source. By using an already existing semantic vocabulary, the terms for the data model and/or an API scheme make use of the terms provided by the already existing semantic vocabulary. When retrieving the information about the semantic vocabulary to conduct a mapping with a semantic reference vocabulary it is not necessary to parse or retrieve the complete information of the semantic vocabulary. Instead, it is sufficient to just have the information about the reference, such that the processing unit can access this information from an external database, for example.

To enable an automated mapping, it is preferred that the reference to the pre-defined semantic vocabulary is machine readable. For example, the reference may be in the form of a link (URL, Unified Resource Locator) to a XML (extended mark-up language) file or any other suitable data format.

Alternatively, the information about the semantic vocabulary may be a (real) semantic vocabulary which is assigned to the data source. In this case, a complete semantic vocabulary consisting of the used terms for a data model and/or the API scheme may be set up by the provider of the data source (e.g. a Web Service). The step of retrieving the information about the semantic vocabulary consists of retrieving the complete semantic vocabulary including all used terms for data exchange with the data source.

The semantic vocabulary may consist of a table, at least containing a list of values of the terms and a key associated to each other. It is preferred that the key is a globally standardized key. This embodiment enables an easy and automated mapping between the used semantic vocabulary of the data source and a semantic reference vocabulary.

According to a further preferred embodiment, as a further step, the semantic vocabulary is parsed to determine the mapping. For example, it is possible to determine a semantic similarity index. A semantic similarity index provides an information about a percentage of probability that two terms (one of the semantic vocabulary of the data source and another of the semantic reference vocabulary) have the same semantic meaning. This step may be done iteratively for different combinations of terms to be assigned. As a result, a table may be provided having assigned those terms which are likely probable to have the same semantic meaning. In addition, a global key may be generated for each pair of terms which is regarded to be highly probable to have the same semantic meaning. Alternatively, parsing the semantic vocabulary is made to find those terms in the semantic vocabulary whose key matches with the key in the semantic reference vocabulary to find the reference term to be assigned (see below).

As a further preferred embodiment, the step of processing the information for receiving the mapping consists of assigning the terms in the semantic vocabulary and the semantic reference vocabulary having the same key. According to this embodiment, the tables of the semantic vocabulary of the data source and the semantic reference vocabulary are scanned or browsed to find out those terms of both tables which have the same (globally standardized) key. As a result, a new, extended table may be provided having the information about the globally standardized key, the term of the semantic reference vocabulary and the term of the semantic vocabulary of the data source.

According to a further preferred embodiment, the information about the semantic vocabulary may be retrieved on the fly, e.g. when requesting or receiving data from one of the data sources. This embodiment may be carried out if a processing unit implementing the method according to the invention has lots of computational power.

According to a further preferred embodiment, the information about the semantic vocabulary may be stored in a cache memory. According to this embodiment, it is not necessary to generate the mapping every time a request or a response of data of one of the data sources is processed. Hence, this embodiment requires less computational power.

According to a further preferred embodiment, the steps of retrieving the information about the semantic vocabulary and processing the information for receiving a mapping are conducted as pre-preparatory steps, wherein the mapping is stored in the cache memory. In particular, the cache memory may be a non-volatile memory such that the steps of retrieving the information about the semantic vocabulary and processing the information for receiving a mapping have to be conducted only once.

According to a third aspect of the present invention, a piece of software for executing the steps of the method as described herein when set piece of software is run on a computer is suggested.

With the present invention, it is therefore possible to automatically integrate data received from a data source to output the received data through a unified API interface. In particular, it is possible to make a mapping of the terms used in a data model and/or an API scheme of the respective data source and the unified API interface. In particular, the mapping can be made without any or only little input of human implementation steps by using semantic vocabularies assigned to the data source to be integrated and the unified API interface.

For a complete understanding of the present invention and advantages thereof, reference is now made to the following description taken in conjunction with the accompanying drawings. The invention is explained in more detail below using an exemplary embodiment which is specified in the schematic figure of the drawing, in which:

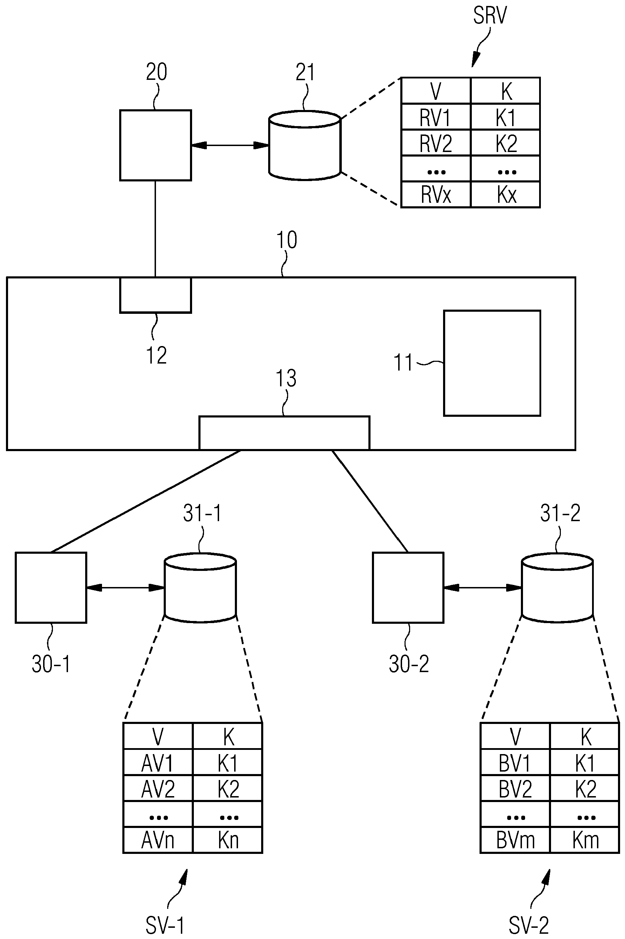

- Fig. 1: shows a schematic drawing of a system enabling automated integration of data received from a plurality of data sources to be output through a unified API interface.

Fig. 1 illustrates a software system consisting of a software platform 10 which makes use of an application programming interface (API) 20 and connects to two data sources 30-1, 30-2. By way of example only, the software platform 10 may be a commercial product such as "MindSphere" or "SiMobility Connect" which are able to integrate a huge amount of different data sources. The data sources 30-1, 30-2 may be employed as web services. In addition, the data sources may be a sensor or a field device providing sensor information to the software system.

The API 20, or any other application (app), communicates with the software platform 10 via a standardized communication protocol. In particular, the communication is defined with regard to terms that are used in a data model and/or an API scheme, provided by a unified API interface 12 of the software platform 10. To enable a provision of the data received from the data sources 30-1, 30-2 which may communicate via one or more interfaces 13 of the software platform 10 in different terms with regard to a used data model and/or API scheme of the respective data source 30-1, 30-2 compared to the unified API interface 12, an integration (i.e. transformation or adaption) of the received data from the data sources 30-1, 30-2 has to be made to comply with the terms of the unified API interface 12.

The adaption of those data is conducted by a so-called data adapter 11 of the software platform 10. The integration of those data is conducted with regard to the terms which are used in the data model and/or the API scheme of the respective data source 30-1, 30-2 and the terms used in a data model and/or an API scheme of the API 20 providing service to an end user and the unified API interface, respectively.

The data sources 30-1, 30-2 may be provided by the same or different providers, i.e. companies. For example, the data sources 30-1, 30-2 may be Web Services A and B providing information about vehicles which can be hired. The Web Services A and B use different data models and API schema properties with different terms that represent the same values.

As an example, a request to the Web Service A, provided by the data source 30-1 can be requested at the API endpoint by the command:
*GET* www.companyA.com/api2/mobility/vehicles/amount

The returned data object of the web service A is:

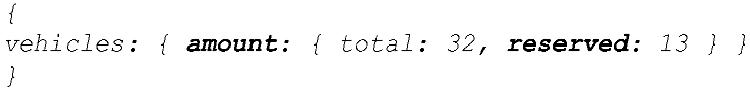

The request command to the Web Service B provided by the data source 30-2 reads:
*GET* www.companyB.com/api1.5/mobility/vehicles/quantity

The returned data object from the data source 30-2 to that request is:

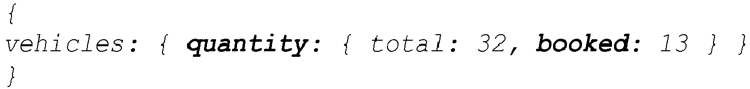

As can be easily seen, the request (GET commands) to the two Web Services A and B provided by data sources 30-1 and 30-2 are different with regard to the terms "amount" used by Web Service A and "quantity" used by the Web Service B. In addition, the returned data object differs with respect to the terms "amount" and "reserved" used by the web service A and "quantity" and "booked" used by the web service B. The actual meaning of data properties and the purpose of the API endpoint are just the same. However, the web services A and B are using different synonyms of the same term.

The adaption of the terms used by the data sources 30-1, 30-2 into the terms used by the API 20 has been a manual process in the past which was carried out by a software engineer or a software engineer team. To automate this transformation, it is suggested making use of semantic vocabularies. Semantic vocabularies are used in different business domains, such as mobility, energy and so on.

According to the invention, a semantic vocabulary SV-1 is assigned to the data source 30-1. Accordingly, a semantic vocabulary SV-2 is assigned to the data source 30-2. It is to be noted that each data source 30-1, 30-2 may use its own semantic vocabulary SV-1, SV-2. I.e., the semantic vocabularies SV-1, SV-2 can be identically or different. The semantic vocabulary may be stored in a database 31-1, 31-2. The database 31-1, 31-2 may be an integral part of the data source 30-1 or 30-2 or any other storage medium.

In addition, the semantic vocabulary does not have to be stored in a memory of the data source. Alternatively, a reference to a globally known semantic vocabulary may be stored as an alternative to the vocabulary itself.

The semantic vocabularies SV-1, SV-2 consist of a respective table which contains at least a list of values V of the terms and a key K associated to each value V. For example, the semantic vocabulary SV-1 consists of the values AV1, AV2, ..., AVn. A key K1 is associated to the value AV1, a key K2 is associated to the value AV2 and a key Kn is associated to the value AVn.

Correspondingly, the vocabulary SV-2 consists of a table with values V and associated keys K. In the outlined example, the values V consist of BV1, BV2, ..., BVm wherein a key K1 is associated to the value BV1, a key K2 is associated to a value BV2 and a key Km is associated to the value BVm. The amount of values n of the semantic vocabulary SV-1 and the amount m of the semantic vocabulary SV-2 may be the same (i.e. n = m) or different (i.e. n ≠ m).

The unified API interface and the API 20 are using a semantic reference vocabulary SRV which might be stored in a database 21. The semantic reference vocabulary SRV consists of a table, at least containing a list of values V of the terms and a key K associated with each value V. The reference values in this table are denoted with RV1, RV2, ..., RVn where a key K1 is associated to the reference value RV1, a key K2 is associated to a reference value RV2 and a key Kx is associated to a reference value RVx. The amount of values x of the semantic reference vocabulary SRV and the amounts m and n of the semantic vocabularies SV-1, SV-2 may be the same (i.e. x = n = m) or different (i.e. x ≠ m and /or x ≠ n).

The integration of data received from one of the data sources 30-1 and/or 30-2 comprises the step of retrieving an information about the semantic vocabulary SV-1, SV-2 used by the data sources 30-1, 30-2. As outlined above, the information about the semantic vocabulary SV-1, SV-2 can consist of a reference to a predefined semantic vocabulary or the actual semantic vocabulary SV-1, SV-2 used and stored within the respective database 31-1, 31-2.

When using a reference to a predefined semantic vocabulary, the reference has to be machine readable. For example, the reference might be a link (URL) to a XML file that contains the reference semantic vocabulary.

Using semantic vocabularies enables the data adapter 11 to determine a mapping of the semantic vocabulary SV-1, SV-2 used by a respective data source 30-1, 30-2 to the semantic reference vocabulary SRV. The mapping assigns the different terms in the semantic vocabulary SV-1 or SV-2 and the semantic reference vocabulary SRV that has the same meaning assigned to each other.

This can be made by the fact that the key K in the semantic vocabularies SV-1, SV-2 and SRV is a globally standardized key. As a result, those values V of the semantic vocabularies SV-1, SV-2 are assigned to a respective value V of the semantic reference vocabulary SRV which have the same key K I their tables.

The mapping can be made on the fly, i.e. determined when a request is sent to the data source 30-1, 30-2 and a response is received from the data source 30-1, 30-2. Alternatively, the mapping can be determined once, e.g. after a respective data source 30-1, 30-2 has connected to the software platform 10. This pre-calculated mapping can be stored in a memory or a storage which is accessible by the software platform 10 and the data adapter 11, respectively.

If the mapping is known, on requesting data from one of the data sources 30-1, 30-2 the GET-command can be adapted such that for the Web Service A provided by the data source 30-1, the term "amount" is used, while when the same GET command is directed to the Web Service B provided by the data source 30-2, the term "quantity" is used. In addition, on receiving data from one of the two data sources 30-1, 30-2, querying the mapping enables outputting the received data through the unified API interface 12 with the terms of the semantic reference vocabulary SRV used by the unified API interface 12 and the API 20. For example, if the API interface 12 uses the term "amount" and "reserved" no change has to be made to the returned data object provided by Web Service A (i.e. the data source 30-1). On receiving the data from the data source 30-2 the returned data object is amended with respect to the used terms "quantity" (which is replaced by the term "amount") and "booked" (which is replaced by the term "reserved").

Use of semantic vocabularies and a known mapping allows the data adapter to identify those terms which are considered to be equal. As a result, an automated process can be made by the data adapter such that integrating data received from one of the data sources can be made to output the received data through a unified API interface. The data adapter 11 enables a significantly reduction of costs and time for integrating a data source into the software platform 10.

Using semantic vocabularies enables a data mapping without input from human beings. Thereby, costs and time for integrating new web services and data sources can be reduced. This increases attractiveness of software platforms for customers.

As an alternative, use of machine learning algorithms may be made. A machine learning algorithm may implement a mapping by analyzing different API schemas, data models and a way how existing integration adapters are mapping the terms. As an advantage, service providers do not have to specify or follow specific vocabulary. However, machine learning systems require time and huge amount of data to be trained before making precise decisions about mapping API schemes and data models. Furthermore, a big complexity of machine learning algorithm that requires specific skills and significant time for implementation of such systems is necessary.

The method described in this document may be used in the well-known commercial software platforms "MindSphere" or "SiMobility Connect" which integrate a huge amount of applications through a "unified" API interface. In addition, the Travel Route Planner "Hafas" may benefit from the advantages of the invention.

## Claims

1. A method for integrating data received from one or more data sources (30-1, 30-2) to output the received data through a unified API interface (12), comprising the steps of:
- retrieving an information about a semantic vocabulary (SV-1, SV-2) used by a respective of the one or more data sources (30-1, 30-2), wherein the semantic vocabulary (SV-1, SV-2) defines terms that are used in a data model and/or an API scheme of the respective data source (30-1, 30-2);
- processing the information for receiving a mapping of the semantic vocabulary (SV-1, SV-2) used by a respective data source (30-1, 30-2) to a semantic reference vocabulary (SRV), the semantic reference vocabulary (SRV) defining terms that are used in a data model and/or an API scheme of the unified API interface (12), in which different terms in the semantic vocabulary (SV-1, SV-2) and the semantic reference vocabulary (SRV) that have the same meaning are assigned to each other;
- on requesting data from one of the data sources (30-1, 30-2), querying the mapping to use the terms used by the data source (30-1, 30-2); and/or
- on receiving data from one of the data sources (30-1, 30-2), querying the mapping to output the received data through the unified API interface (12) with the terms of the semantic reference vocabulary (SRV) used by the unified API interface (12).

2. The method according to claim 1, wherein the information about the semantic vocabulary (SV-1, SV-2) consists of a reference to a pre-defined semantic vocabulary (SV-1, SV-2).

3. The method according to claim 2, wherein the reference is machine readable.

4. The method according to one of the preceding claims, wherein the information about the semantic vocabulary (SV-1, SV-2) is assigned to the data source (30-1, 30-2).

5. The method according to claim 4, wherein the information about the semantic vocabulary (SV-1, SV-2) consists of a table, at least containing a list of values (V) of the terms and a key (K) associated to each value (V).

6. The method according to claim 1, wherein the key (K) is a globally standardized key.

7. The method according to one of the preceding claims, wherein as a further step, the semantic vocabulary (SV-1, SV-2) is parsed to determine the mapping.

8. The method according to one of the preceding claims, wherein the step of processing the information for receiving the mapping consists of assigning the terms having the same key (K).

9. The method according to one of the preceding claims, wherein the information about the semantic vocabulary (SV-1, SV-2) is retrieved on the fly when requesting or receiving data from one of the data sources (30-1, 30-2).

10. The method according to one of the preceding claims, wherein the information about the semantic vocabulary (SV-1, SV-2) is stored in a cache memory.

11. The method according to one of the preceding claims, wherein the steps of retrieving the information about the semantic vocabulary (SV-1, SV-2) and processing the information for receiving a mapping are conducted as a preparatory steps, wherein the mapping is stored in a cache memory.

12. Piece of Software for executing the steps of a method according to one of the preceding claims, when run on a computer.

13. A system for integrating data received from one or more data sources (30-1, 30-2) to output the received data through a unified API interface (12), comprising a processing unit adapted to
- retrieve an information about a semantic vocabulary (SV-1, SV-2) used by a respective of the one or more data sources (30-1, 30-2), wherein the semantic vocabulary (SV-1, SV-2) defines terms that are used in a data model and/or an API scheme of the respective data source (30-1, 30-2);
- process the information for receiving a mapping of the semantic vocabulary (SV-1, SV-2) used by a respective data source (30-1, 30-2) to a semantic reference vocabulary (SRV), the semantic reference vocabulary (SRV) defining terms that are used in a data model and/or an API scheme of the unified API interface (12), in which different terms in the semantic vocabulary (SV-1, SV-2) and the semantic reference vocabulary (SRV) that have the same meaning are assigned to each other;
- on requesting data from one of the data sources (30-1, 30-2), query the mapping to use the terms used by the data source (30-1, 30-2); and/or
- on receiving data from one of the data sources (30-1, 30-2), query the mapping to output the received data through the unified API interface (12) with the terms of the semantic reference vocabulary (SRV) used by the unified API interface (12).

## Amended claims

### Amended claims in accordance with Rule 137(2) EPC.

1. A method for integrating data received from one or more data sources (30-1, 30-2) to output the received data through an interface (12), comprising the steps of:
- retrieving an information about a semantic vocabulary (SV-1, SV-2) used by a respective of the one or more data sources (30-1, 30-2), wherein the semantic vocabulary (SV-1, SV-2) defines terms that are used in a data model and/or an API scheme of the respective data source (30-1, 30-2);
- processing the information for receiving a mapping of the semantic vocabulary (SV-1, SV-2) used by a respective data source (30-1, 30-2) to a semantic reference vocabulary (SRV), the semantic reference vocabulary (SRV) defining terms that are used in a data model and/or a scheme of the interface (12), in which different terms in the semantic vocabulary (SV-1, SV-2) and the semantic reference vocabulary (SRV) that have the same meaning are assigned to each other;
- on requesting data from one of the data sources (30-1, 30-2), querying the mapping to use the terms used by the data source (30-1, 30-2); and/or
- on receiving data from one of the data sources (30-1, 30-2), querying the mapping to output the received data with the terms of the semantic reference vocabulary (SRV);
**characterized in that**
- the received data are output through a unified API interface (12) with the terms of the semantic reference vocabulary (SRV) used by the unified API interface (12);
- the information about the semantic vocabulary (SV-1, SV-2) consists of a table, at least containing a list of values (V) of the terms and a globally standardized key (K) associated to each value (V).

2. The method according to claim 1, wherein the information about the semantic vocabulary (SV-1, SV-2) consists of a reference to a pre-defined semantic vocabulary (SV-1, SV-2).

3. The method according to claim 2, wherein the reference is machine readable.

4. The method according to one of the preceding claims, wherein the information about the semantic vocabulary (SV-1, SV-2) is assigned to the data source (30-1, 30-2).

5. The method according to one of the preceding claims, wherein as a further step, the semantic vocabulary (SV-1, SV-2) is parsed to determine the mapping.

6. The method according to one of the preceding claims, wherein the step of processing the information for receiving the mapping consists of assigning the terms having the same key (K).

7. The method according to one of the preceding claims, wherein the information about the semantic vocabulary (SV-1, SV-2) is retrieved on the fly when requesting or receiving data from one of the data sources (30-1, 30-2).

8. The method according to one of the preceding claims, wherein the information about the semantic vocabulary (SV-1, SV-2) is stored in a cache memory.

9. The method according to one of the preceding claims, wherein the steps of retrieving the information about the semantic vocabulary (SV-1, SV-2) and processing the information for receiving a mapping are conducted as a preparatory steps, wherein the mapping is stored in a cache memory.

10. Piece of Software for executing the steps of a method according to one of the preceding claims, when run on a computer.

11. A system for integrating data received from one or more data sources (30-1, 30-2) to output the received data through an interface (12), comprising a processing unit adapted to
- retrieve an information about a semantic vocabulary (SV-1, SV-2) used by a respective of the one or more data sources (30-1, 30-2), wherein the semantic vocabulary (SV-1, SV-2) defines terms that are used in a data model and/or an API scheme of the respective data source (30-1, 30-2);
- process the information for receiving a mapping of the semantic vocabulary (SV-1, SV-2) used by a respective data source (30-1, 30-2) to a semantic reference vocabulary (SRV), the semantic reference vocabulary (SRV) defining terms that are used in a data model and/or a scheme of the interface (12), in which different terms in the semantic vocabulary (SV-1, SV-2) and the semantic reference vocabulary (SRV) that have the same meaning are assigned to each other;
- on requesting data from one of the data sources (30-1, 30-2), query the mapping to use the terms used by the data source (30-1, 30-2); and/or
- on receiving data from one of the data sources (30-1, 30-2), query the mapping to output the received data with the terms of the semantic reference vocabulary (SRV);
**characterized in that**
- the processing unit is further adapted to output the received data through a unified API interface (12) with the terms of the semantic reference vocabulary (SRV) used by the unified API interface (12);
- the information about the semantic vocabulary (SV-1, SV-2) consists of a table, at least containing a list of values (V) of the terms and a globally standardized key (K) associated to each value (V).
